Europäisches Patentamt

European Patent Office

Office européen des brevets

(11) Publication number: **0 551 809 A1**

## EUROPEAN PATENT APPLICATION

(21) Application number: **93100042.6**

(22) Date of filing: **05.01.93**

(51) Int. Cl.5: **G11B 5/147**

(30) Priority: **08.01.92 JP 1251/92**

(43) Date of publication of application:
**21.07.93 Bulletin 93/29**

(84) Designated Contracting States:
**DE FR GB NL**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Echigo, Noriyasu**
**12-12-103, Miyazuka-cho**
**Ashiya-shi, Hyogo-ken(JP)**

(74) Representative: **Eisenführ, Speiser & Partner**
**Martinistrasse 24**
**W-2800 Bremen 1 (DE)**

(54) **Magnetic head and magnetic recording system.**

(57) A magnetic head with a second basic plate being adhered through an adhesion layer on the face opposite to the first basic plate with a magnetic core composed of a laminated member of N (N $\geq$ 2) metallic magnetic layers with a thickness A interposed with N - 1 (or more) layer insulation layers of a thickness B, formed directly on the first basic plate. A part of the portion recorded with the $N^{th}$ metallic magnetic layer, and of the portion recorded with the $(N - 1)^{th}$ metallic magnetic layer are overwritten when recording the next track so that better recording can be realized.

*Fig. 2*

## BACKGROUND OF THE INVENTION

The present invention generally relates to a magnetic head for effecting recording, reproducing operations with high recording density, and a recording system of recording signals on the magnetic recording medium in a magnetic recording apparatus such as video tape recorder or the like.

In the magnetic recording apparatus such as a video tape recorder (hereinafter referred to as VTR) or the like, high recording density is advanced year by year, and the developments in the respective quarters are promoted with possessed area of, at present, one bit being provided towards high density records of 1 $\mu m^2$. In the case of the recording density, the recording, reproducing operations are effected with approximately 0.4 $\mu m$ in the shortest record wave length, approximately 5 $\mu m$ in the track pitch. It is important to make as small as possible a vacant space (spacing) existing between the head and the magnetic recording medium (hereinafter it is restricted to the magnetic tape).

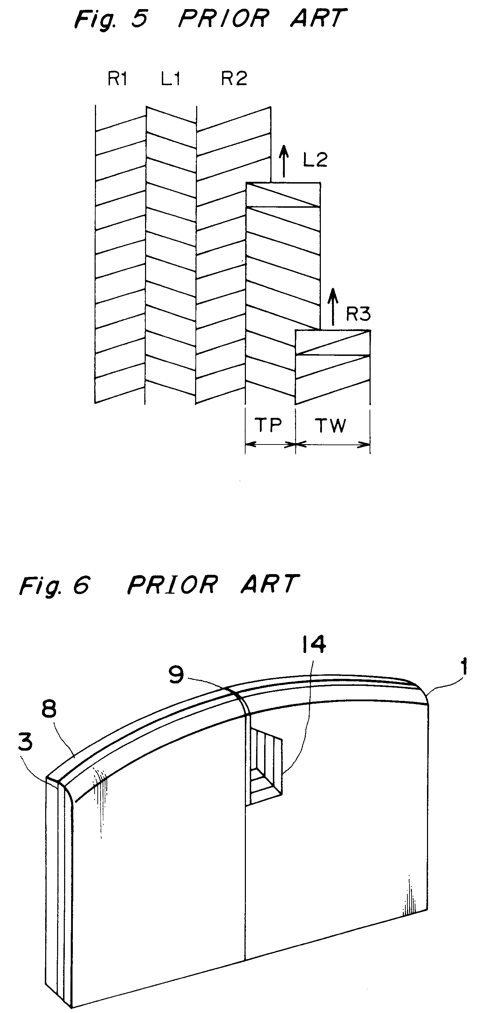

In the narrower track, so-called guard bands which do not contribute towards the recording, reproducing operations are not caused between the adjacent tracks. The signal disturbances from the adjacent track are removed by the "azimuth recording" with the gaps of the magnetic head being mutually inclined so that the recording, reproducing operations are effected without provision of the guard bands in the tracks themselves. Fig. 5 shows a recording patterns when the azimuth recording operation has been effected without the guard bands. The magnetic head shows only the portion of the magnetic core composing the head track.

The next recording track is adapted to have one region of the last recording track superposedly written with respect to the recording track to be regulated by a track end on the tape progressive direction side and the other track end to be fixed by the track width of the magnetic head. Namely, when signals are stored with a track pitch (TP) where the magnetic heads of the channels R, L of the reverse azimuth are smaller than the head track width (TW), the region of TW - TP is overridden with the opposite side channel of the tracks recorded with the head of the other channel.

In a ring type magnetic head to be used in the recording, reproducing operations, a magnetic head with the magnetic core being composed of a plurality of metallic magnetic thin films and the laminated member of the layer insulation layer is used from a bulk shape with ferrite being represented conventionally, accompanied by the high frequency of the magnetic recording apparatus. One example shows a perspective view of Fig. 6. Reference numeral 1 is a first basic plate. Reference numeral 2 is a metallic layer, reference numeral 3 is a layer insulating layer, with a magnetic core being composed by these being laminated. Reference numeral 8 is a second basic plate. The winding is omitted for simplification of the drawing. The head track width TW is represented by $TW = N \times A + (N - 1) \times B$ where the thickness of the metallic magnetic layer is A, the thickness of the layer insulating layer is B, the laminated layer number is N in the magnetic head of this construction. The high frequency output of the magnetic head (TW = A) made of single layers becomes lower, because the specific resistance of the metallic magnetic thin film is normally small and eddy-current loss is caused in the high frequency region. But the metallic magnetic layer is divided in layers to make the laminated construction with the layer insulation layer of $SiO_2$ or the like among each layer being disposed so as to provide a magnetic head having higher performance even in the high frequency.

When a recording operation is effected on a magnetic tape by a magnetic head of such a layer-built type, the coming off of the recording operation is caused in the layer insulating layer portion without fail on the recording pattern. The recording pattern which contributes towards the output is reduced by the recording coming off operation. As the width of the recording coming off is relatively small so far by the layer insulating layer with respect to the track pitch, the influences of the output reduction can be neglected. When the recording, reproducing operations are effected on such a narrow track as described at the beginning, the influences of the output reduction by such a recording coming off operation becomes larger.

It is necessary to make as small as possible the spacing between the magnetic head and the magnetic tape so as to effect the short wave length recording operation described at the beginning. Thus, the surface roughness of the magnetic tape surface of the magnetic head is required to be made as small as possible.

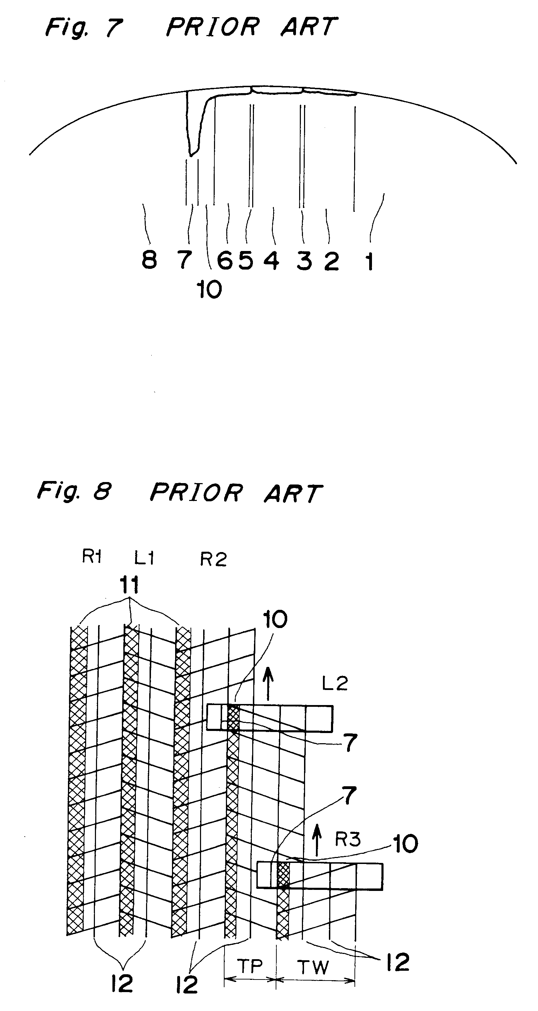

When the magnetic head shown in Fig. 6 is actually slid with respect to the magnetic tape, the stage difference (hereinafter referred to as deviated abrasion) among such magnetic head construction materials as shown in Fig. 7 is caused by difference in the abrasion speed of materials constituting the magnetic head, the ambient environment and so on. Fig. 7 shows the profile in the head sectional direction near the magnetic gap is measured with a roughness meter of a contact needle type. The reason why such profile has been provided is the abrasion has been advanced in the order of the metallic magnetic layer, the layer insulation layer, the basic plate with the adhesion layer 7 being generally larger in the abrasion speed. Especially when the side of the first basic plate 1 has been made a first metallic magnetic layer 2, the metallic magnetic layer 6 of the N (N = 3 in the drawing) on the side of the adhesion layer 7 has the abrasion advanced from the metallic magnetic layer to the other N - 1 in a shape dragged by the abrasion of the adhesion layer 7 so as to cause the deviated abrasion progressing portion 10. The distance between the dotted lines and the metallic magnetic layer of Fig. 7 becomes the spacing with respect to the magnetic tape, because the metallic magnetic layer grasped between two basic plates 1, 8 becomes concave when such deviated abrasion has been caused. Especially, the portion 10 with the deviated abrasion being advanced in it is larger in the spacing. In an extreme case, the portion 10 does not contribute at all to the recording, reproducing operations.

The recording pattern will be described hereinafter when the recording operation has been effected on the magnetic tape by a VTR of a rotary cylinder type with the use of the magnetic head where such deviated abrasion as shown in Fig. 7 is caused. In this case, it is considered that the magnetic tape moves in the next two direction relatively with respect to the magnetic head after a certain track has been recorded.

(1 - 1) In a case of moving onto a first basic plate side

(1 - 2) In a case of moving onto a second basic plate side

A case will be described where the magnetic tape has been moved relatively onto the side of the second basic plate 8 with respect to the magnetic head when the signal has been recorded on the next track after the signal has been recorded on the magnetic tape with the magnetic head of a certain channel of the (1 - 2). Namely, as shown in Fig. 8, the magnetic tape moves to effect the recording operation in the track order of R1, L1, R2, L2, R3. A N metallic magnetic layer (N = 3) having a portion 10 advanced in the abrasion overrides the track recorded in the other channel. The recording magnetic field caused in the deviated abrasion portion 10 becomes smaller on a medium than the other metallic magnetic layer, because the spacing is larger. As a result, the signal of the channel on the opposite side cannot be completely erased, and the self-signal cannot be completely recorded. As a result, the recording width on the actual tape is effectively smaller than the track pitch TP, with the non-erased signals remaining on the overridden portion.

A case where the magnetic tape has moved relatively onto the first basic plate side 1 with respect to the magnetic head will be taken into consideration, in the recording of the signals on the next track, after the signal has been recorded on the magnetic tape with the magnetic head of the (1 - 1).

In this case, the relation among a metallic magnetic layer thickness A for deciding the track width TW of a magnetic head, a layer insulating layer thickness B, the layer-built number N and the truck pitch TP can be divided as follows.

(2 - 1) A case where the track pitch TP is larger than the distance (N - 1) × (N - 2) × B to the boundary of a first basic plate 1 and a first metallic magnetic layer 2, of a N - 1 metallic magnetic layer 4 and a N - 1 layer insulation layer 5, and is smaller than the track width TW (= N × A + (N - 1) × B) of the magnetic head.

(2 - 2) A case where the track pitch TP is equal to or smaller than the distance (N - 1) × (N - 2) × B to the boundary of a first basic plate 1 and a first metallic magnetic layer 2, of the N - 1 metallic magnetic layer 4 and the N - 1 layer insulating layer 5.

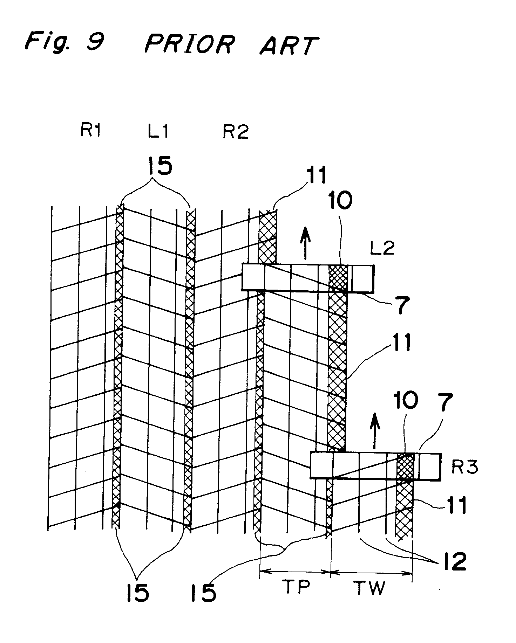

At first, a case of constituting as in the (2 - 1) is shown in Fig. 9. A part of a portion recorded with the N metallic magnetic layer is overridden with the channel on the opposite side to be record next. One portion of the region recorded with the N metallic magnetic layer is not completely recorded as compared with the other portion as shown in Fig. 8 11. Therefore, the erasing operation is likely to be effected as compared with the other portion when the portion is overridden with the channel on the opposite side. In the case of the magnetic head, the leakage magnetic field is caused on the side face portion. Although the completely magnetized portion is hardly erased by the leakage magnetic field, the portion 11, incomplete in recording, of the N metallic magnetic layer is likely to be erased. As a result, only the recording width smaller than the track pitch remains on the tape because of the existence of the erased portion 15.

The recording pattern of the magnetic tape is formed in a shape where only the B of the thickness of the layer insulation layer comes out. When the track pitch is slightly larger than the distance (N - 1) × (A + B) from the first basic plate, the recording pattern is formed smaller by the width B than the track pitch. Accordingly, the recording pattern becomes smaller by the portion of the width B, so that the output is lowered correspondingly.

The size where the recording pattern width on the magnetic tape becomes smaller with respect to the track pitch is approximately 1μm, and approximately 2 μm at its maximum. In the case of the magnetic recording apparatus large in the track pitch, the width is hard to become a problem so far. It is clear that the influence becomes larger than before when the recording pattern width on the magnetic tape is reduced by 1 through 2 μm if the track pitch becomes approximately 5 μm as described at the beginning.

In the conventional art, the recording pattern remaining actually on the magnetic tape becomes smaller than the track pitch, when the recording, reproducing operations are effected in the narrow track, so that the reduction portion leads to the large output reduction.

As one portion of the N metallic magnetic layer on the adhesion layer is further advanced in abrasion than the other portion, with a disadvantage that the recording, reproducing performance of the portion is extremely lowered.

## SUMMARY OF THE INVENTION

Accordingly, the present invention has been developed with a view to substantially eliminating the above discussed drawbacks inherent in the prior art and has for its essential object to provide an improved magnetic recording apparatus.

Another important object of the present invention is to provide a magnetic head with the deviated abrasion being reduced in it, and a magnetic recording apparatus where the reduction in the recording pattern width is lowered. The present invention is provided with the mechanism of the abrasion of the layer-built type magnetic head being analyzed and the above described disadvantages being solved by a simple method.

In accomplishing these and other objects, the present invention uses a magnetic head where a second basic plate is adhered through an adhering layer on a face opposite to a first basic plate with a magnetic core composed of a plurality of metallic magnetic layer and layer insulation layers being formed directly on the first basic plate.

A first basic plate is positioned on the moving direction side of the magnetic tape when the above described magnetic head is placed on the magnetic recording apparatus so as to effect the recording, reproducing operations. A portion slid by the adhering layer on the second basic plate side, a metallic magnetic layer facing the adhering layer, and a layer insulation layer facing the above described metallic magnetic layer is overridden by a head which is adapted to record next after the recording operation on a certain track.

Namely, present invention is a magnetic head with a second basic plate being adhered through an adhesion layer on the side opposite to the first basic plate, a magnetic core composed of a laminated member of a metallic magnetic layer of the thickness A of a N layer (N ≥ 2) and a layer insulation layer of the thickness B of a (N - 1) layer or more is formed on a first basic plate. A magnetic head is used where the distance (N - 1) × A + (N - 2) × B from the first basic plate to the boundary between the metallic magnetic layer of the N - 1 layer and the layer insulation layer is equal to or more than the track pitch of the magnetic recording apparatus to be mounted on the magnetic head. The magnetic recording medium moves relatively onto the first basic plate side with respect to the magnetic head, in the recording operation of the signal onto the next tack, after the signal has been recorded on the magnetic recording medium when the signal is recorded with the magnetic head is mounted on the magnetic recording apparatus.

It is preferable that a magnetic head is used where the thickness of the metallic magnetic layer of the N layer is smaller than the other metallic magnetic layer thickness.

A portion recorded by the N metallic magnetic layer and one portion of a portion recorded by the N - 1 metallic magnetic layer are overridden with the channel on the opposite side by the above described means taken. The portion recorded on the N magnetic layer where the abrasion is likely to be further advanced as compared with the other portion does not remain on the recording pattern. As the distance (N - 1) × A + (N - 2) × B from the first basic plate is equal to or larger than the track pitch, the recording pattern does not become smaller by the width B of the layer insulation layer. The N metallic magnetic layer does not effect the overriding operation, because the magnetic recording medium moves relatively onto the first basic plate side with respect to the magnetic head, in the recording the signal of the next track, after the signal has been recorded on the magnetic recording medium. Therefore, the recording of the overridden portion becomes more complete, and a percentage where the overridden signal remains becomes smaller.

The recording coming-off operation to be caused by the layer insulation layer portion can be prevented to a minimum by the above described means.

The recording pattern does not become smaller with respect to the track pitch as described hereinabove. The output reduction can be prevented. The thickness of the metallic magnetic layer on the adhesion layer side is made smaller than the other portion so that the deviated abrasion region can be made smaller. As a result, the recording reproducing characteristics can be improved. As the present invention sets with respect to the track pitch the thickness of the metallic magnetic layer and the layer insulation layer, the magnetic head of the present invention can be obtained by the adjustment of the film thickness in the formation of each layer. Therefore, the present invention can be applied without any change in the conventional magnetic head manufacturing process. Therefore, the operation is very easy to effect.

## BRIEF DESCRIPTION OF THE DRAWINGS

These and other objects and features of the present invention will become apparent from the following description taken in conjunction with the preferred embodiment thereof with reference to the accompanying drawings, in which;

Fig. 1 is a block diagram of a track portion of a magnetic head in a first embodiment of the present invention;

Fig. 2 is a plan view showing a recording pattern when a recording operation has been effected with a VTR where the magnetic head in the embodiment of the present invention has been mounted;

Fig. 3 is a block diagram of a track portion of a magnetic head in the embodiment of the present invention;

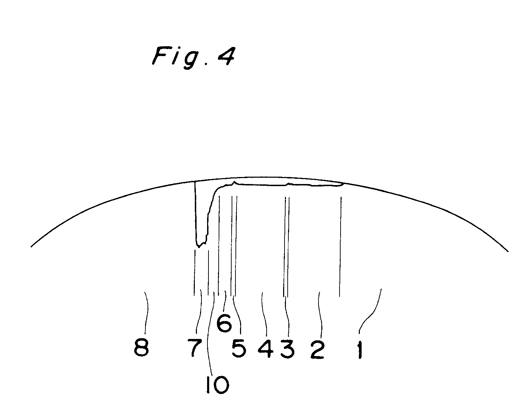

Fig. 4 is a surface roughness profile in a sectional direction of a magnetic head in the embodiment of the present invention;

Fig. 5 is a plan view showing the recording pattern on the conventional magnetic tape;

Fig. 6 is a perspective view of a magnetic head having a magnetic core of a laminated type;

Fig. 7 is a surface roughness profile in a sectional direction of a magnetic head of Fig. 5;

Fig. 8 is a plan view showing the recording pattern in the conventional embodiment; and

Fig. 9 is a plan view showing a recording pattern in the conventional embodiment when the magnetic head has been mounted in the opposite direction to the case of Fig. 7.

## DETAILED DESCRIPTION OF THE INVENTION

Before the description of the present invention proceeds, it is to be noted that like parts are designated by like reference numerals throughout the accompanying drawings.

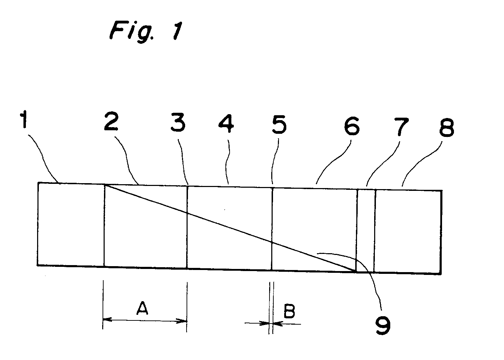

Referring now to the drawings, there is shown in Fig. 1 an enlarged view of a portion for composing a track of a magnetic head showing a first embodiment of the present invention. A first metallic magnetic layer 2, a first layer insulation layer 3, a second metallic magnetic layer 4, a second layer insulation layer 5, a third metallic magnetic layer 6 are formed on a first basic plate so as to adhere a second basic plate 8 with an adhesion layer 7. A laminated member made in this manner is cut at an angle corresponding to an azimuth angle, and thereafter, adheres so as to have a magnetic gap 9 provided. Assume that the thickness of each metallic magnetic layer is A, the thickness of the layer insulation layer is B, and the track width of the magnetic head becomes 3A + 2B. The thickness A of the metallic magnetic layer and the thickness B of the layer insulating layer are set so as to establish the following relation where the track pitch of a VTR on which the magnetic head is mounted is assumed to be TP.

$$TP = 2A + B$$

Reference characters A · B are set so that the track pitch TP may become equal to the distance $(N - 1) \times A + (N - 2) \times B$ to the boundary of the first basic plate 1 and the first metallic magnetic layer 2 and the boundary of the N - 1 metallic magnetic layer 4 and the N - 1 layer insulation layer 5.

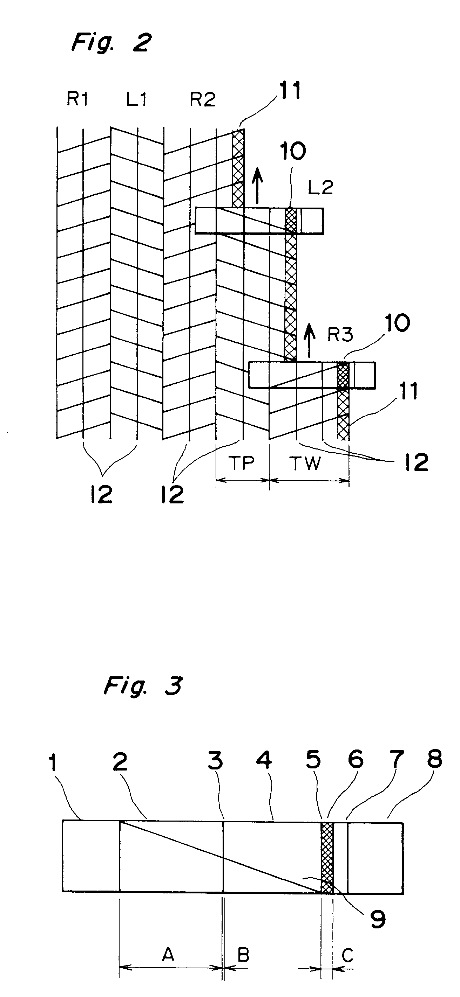

When the magnetic head is mounted on the VTR, a magnetic tape is mounted to relatively move onto the side of the first basic plate 1 with respect to the magnetic head in the recording of the signals on the next track with the magnetic head of the opposite side channel after the signals have been recorded on the magnetic tape with a certain magnetic head. A recording pattern in the recording of the signals with the magnetic head mounted in this manner is shown in Fig. 2. In Fig. 2, the magnetic tape moves to effect a recording operation in the order of tracks of R1, L1, R2, L2, R3. One portion of the third metallic magnetic layer 6 causes a portion 10 of larger abrasion as compared with the other metallic magnetic layer as the abrasion of the adhesion layer 7 proceeds. The deviation abrasion condition is similar to Fig. 6 shown in the conventional embodiment. A portion 11 recorded with the deviated abrasion portion 10 is incomplete in recording as compared with a portion recorded in the other portion. But the portions are all overridden with the channel without fail on the opposite side. Thus, the incomplete recorded portion 11 is likely to be overridden, thus making the residual signals smaller. A portion 12 impossible to record can be provided on the magnetic tape with the layer insulation layer when the recording operation has been effected with the magnetic head of the construction as shown in Fig. 2. In the case of the present embodiment, the track pitch TP is equal to 2A + B. The track end of the channel to be overridden is located on the face of the side of the adhesion layer 7 of the second metallic magnetic layer 4 of the magnetic head with the tracks to be overridden being recorded on it. Therefore, the recording pattern does not become smaller with respect to the track pitch by the width B of the second layer insulation layer 5.

The recording coming-off operation to be caused by the layer insulation layer portion can be prevented to a minimum by the above described means.

The above described first embodiment is a case where the metallic magnetic layer thickness and the layer insulation layer thickness have been set so as to satisfy the relation of TP = 2A + B. Similarly, reference characters A • B are set so that the track pitch TP may become smaller than the distance 2 A + B to the boundary of the first basic plate 1 and the first metallic magnetic layer 2 and the boundary of the second metallic magnetic layer 4 and the second layer insulation layer 5. Namely, the effect of the present invention can be obtained if a setting operation is effected so as to satisfy the relation of becoming TP < 2A + B. When the setting operation has to be effected to the optimum value as noises caused by the adjacent cross talking increase at the signal reproduction time when the rack pitch is too small with respect to the track width. When reference characters A • B are set so that the track pitch TP may become larger than the distance A + B to the boundary of the first basic plate 1 and the first metallic magnetic layer 2 and the boundary of the second metallic magnetic layer 4 and the first layer insulation layer 3, and becomes smaller than the distance 2 A + B to the boundary of the first basic plate 1 and the first metallic magnetic layer 2 and the boundary of the second metallic magnetic layer 4 and the second layer insulation layer 5, the track pitch TP is desirable to become closer to the distance 2 A + B to the boundary of the second metallic magnetic layer 4 and the second layer insulation layer 5.

The second embodiment of the present invention will be described hereinafter with reference to Fig. 3. In the present embodiment, the thickness C of the third metallic magnetic layer 6 is smaller than the thickness A of the other metallic magnetic layer, and is equal to the thickness of the schematic adhesion layer 7. The thickness of the second layer insulation later 5 is equal to the thickness B of the first layer insulating layer 3. As in the first embodiment, reference characters A and B are set to become equal to or smaller than the distance 2 A + B to the boundary of the first basic plate 1 and the first metallic magnetic layer 2 and the boundary of the second metallic magnetic layer 4 and the second layer insulation layer 5. A method of mounting the head is the same as the first embodiment. Fig. 5 shows the surface roughness profile in the head sectional direction near the magnetic gap 9. As the thickness C of the third metallic magnetic layer 6 is schematically equal to the thickness of the adhesion layer 7 in the case of the present embodiment, the deviated abrasion is caused while dragged by the deviated abrasion of the adhesion layer 7 throughout the full thickness of the third metallic magnetic layer 6. As the layer insulating layer is smaller in abrasion speed than the metallic magnetic layer, the deviated abrasion is prevented from being spread so far as the second metallic magnetic layer 4 by the second layer insulating layer 5. As a result, the width of the portion where the deviated abrasion is caused becomes smaller than in the first embodiment, thus improving the recording, reproducing characteristics of the magnetic head. The present embodiment can be applicable to the magnetic recording apparatus where the ratio of the track width with respect to the track pitch is not made large so much.

In the embodiment described so far, the number of the metallic magnetic layers is 3, the number of the layer insulation layers is 2. The effect of the present invention can be obtained as in the above described embodiment if the track pitch TP satisfies the following relation with the number of the metallic magnetic layers being N (N ≥ 2).

$$TP \leq (N - 1) \times A + (N - 2) \times B$$

Namely, reference characters A • B are set so that the track pitch TP may become equal to or smaller than the distance $(N - 1) \times A + (N - 2) \times B$ to the boundary of the first basic plate 1 and the first metallic magnetic layer 2 and the boundary of the N - 1 metallic magnetic layer 4 and the N - 1 layer insulation layer 5.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as included therein.

**Claims**

1.  A magnetic head comprising a second basic plate adhered through an adhesion layer on the face on the side opposite to the first basic plate, a magnetic core composed of a laminated member of a metallic magnetic layer of the thickness A of a N layer (N ≥ 2) and a layer insulation layer of the thickness B of a (N - 1) layer or more formed directly on a first basic plate, the distance $(N - 1) \times A + (N - 2) \times B$ from the first basic plate to the boundary between the metallic magnetic layer of the N - 1 layer and the layer insulation layer being equal to or more than the track pitch of the magnetic recording apparatus to be mounted on the magnetic head.

2.  A magnetic head as defined in the claim 1, where the thickness of the metallic magnetic layer of the N layer is smaller than the other metallic magnetic layer thickness.

3. A magnetic recording system including a magnetic head where a second basic plate is adhered through an adhesion layer on the face on the side opposite to the first basic plate with a magnetic core composed of a laminated member of a metallic magnetic layer of the thickness A of a N layer (N ≧ 2) and a layer insulation layer of the thickness B of a (N - 1) layer or more being formed directly on a first basic plate, comprising a step of moving a magnetic recording medium relatively onto the first basic plate side with respect to the magnetic head, in the recording of the signal on the next track, after the signal has been recorded on the magnetic recording medium with the magnetic head where the distance (N - 1) × A + (N - 2) × B from the first basic plate to the boundary between the metallic magnetic layer of the N - 1 layer and the layer insulation layer is equal to or more than the track pitch of the magnetic recording apparatus to be mounted on the magnetic head.

*Fig. 1*

EP 0 551 809 A1

Fig. 2

R1    L1    R2                    11

                          10

                          L2

                    R3         10

                              11

              TP    TW         12

12      12

Fig. 3

1    2    3   4   5  6  7   8

                              9

        A       B      C

9

Fig. 4

*Fig. 5  PRIOR ART*

*Fig. 6  PRIOR ART*

11

*Fig. 7   PRIOR   ART*

8  7  6 5 4  3  2  1

10

*Fig. 8   PRIOR   ART*

R1    L1    R2

11

10

L2

7

7

R3    10

TP    TW

12    12    12

# Fig. 9 PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 14, no. 585 (P-1148)27 December 1990 & JP-A-22 52 110 ( SHARP CORP ) 9 October 1990 * abstract * | 1,3 | G11B5/147 |
| A | US-A-4 897 748 (KEN TAKAHASHI & AL.) * column 3, line 4 - line 20; claim 2; figures 1-3 * | | |
| A | DE-A-2 907 806 (CANON K.K.) * page 19, line 28 - page 20, line 30; figures 6A,6B * | 1,3 | |

-----

|  |  |  | TECHNICAL FIELDS SEARCHED (Int. Cl.5) |
|---|---|---|---|
|  |  |  | G11B |

The present search report has been drawn up for all claims

| Place of search | Date of completion of the search | Examiner |
|---|---|---|
| BERLIN | 29 MARCH 1993 | GERARD E.A.S. |